# EUROPÄISCHE PATENTSCHRIFT

(11) **EP 3 738 427 B1**
(45) Veröffentlichungstag und Bekanntmachung des Hinweises auf die Patenterteilung: **04.10.2023**
(21) Anmeldenummer: 20156359.0
(22) Anmeldetag: 10.02.2020
(51) Int. Cl.: A01D 43/08, G01B 7/293, A01F 29/22

(54) **SCHNEIDSCHÄRFENDETEKTIONSEINRICHTUNG**
CUTTER SHARPNESS DETECTION DEVICE
DISPOSITIF DE DÉTECTION DE TRANCHANT

(30) Priorität: 16.05.2019 DE 102019112968; 16.05.2019 DE 102019112973; 01.07.2019 DE 102019112965
(43) Veröffentlichungstag der Anmeldung: 18.11.2020
(73) Patentinhaber: CLAAS Selbstfahrende Erntemaschinen GmbH, 33428 Harsewinkel (DE)
(72) Erfinder: Heitmann, Christoph, 48231 Warendorf (DE); Neitemeier, Dennis, 59510 Lippetal (DE); Brune, Markus, 33428 Harsewinkel (DE); Huster, Jochen, 33330 Gütersloh (DE); Fischer, Frédéric, 59823 Arnsberg (DE); Stremlau, Björn, 49509 Recke (DE)
(74) Vertreter: CLAAS Gruppe

(56) Entgegenhaltungen:
- DE-A1- 10 235 919
- DE-A1-102011 005 317
- DE-A1-102014 218 408
- DE-A1-102017 103 537

## Beschreibung

Die Erfindung betrifft eine Vorrichtung zur Erfassung des Verschleißzustandes einer Häckselmesseranordnung einer zur Verarbeitung eines Gutstroms vorgesehenen Häckseleinrichtung nach dem Oberbegriff des Anspruchs 1.

Aus der DE 10 2017 103 537 ist eine gattungsgemäße Sensoranordnung bekannt geworden, die mittels induktiver Sensoren die umlaufenden Messer einer Häckseltrommelanordnung detektiert und aus dem ermittelten magnetischen Fluss einen Verschleißzustand der Häckselmesser ableitet, wobei sich der Verschleiß aus der jeweils induzierten Spannung ergibt.

Zudem ist u.a. aus EP 1 522 214 eine ähnliche Schneidschärfendetektionseinrichtung bekannt geworden, wobei hier als Detektionseinrichtungen optische Sensoren wie Kamerasysteme, Laser und Nahinfrarotsensoren zum Einsatz kommen.

Optische Sensoren haben insbesondere das Problem, dass die Schneidkantenanalyse aufgrund der hohen Umlaufgeschwindigkeiten der Häckselmesser erschwert wird, was häufig zu qualitativ unzureichenden Analyseergebnissen führt. Demgegenüber wird die Analyse einer induzierten Spannung deutlich weniger von den hohen Umlaufgeschwindigkeiten der zu detektierenden Häckselmesser beeinflusst. Mitunter führen jedoch die ausschließlich auf die induzierte Spannung gerichteten Auswertverfahren nicht zu einer hinreichend genauen Abschätzung eines Verschleißzustandes.

Es ist deshalb Aufgabe der Erfindung, die beschriebenen Nachteile des Standes der Technik zu vermeiden und insbesondere die bekannten Erfassungsanordnungen derart auszugestalten und weiterzubilden, dass die Erfassung des Verschleißzustandes der Häckselmesser mit einfachen Maßnahmen verbessert werden kann, insbesondere genauer wird.

Diese Aufgabe wird erfindungsgemäß durch die kennzeichnenden Merkmale des Anspruchs 1 gelöst.

Indem die Erfassungsanordnung zur Erfassung eines Verschleißzustands einer Häckselmesseranordnung einer zur Verarbeitung eines Gutstroms vorgesehenen Häckseleinrichtung als induktive Erfassungsanordnung ausgeführt ist und die beim Überstreichen der Sensoranordnung durch eine Häckselmesseranordnung induzierte Spannung die magnetische Messgröße bildet und die Erfassungsanordnung die induzierte Spannung ermittelt und als Spannungssignal aufzeichnet, das Spannungssignal in der Auswerteinheit mittels Frequenzanalyse in seine Frequenzanteile zerlegt wird, die Frequenzanteile in Frequenzanteile einer Grundschwingung und in Signalverzerrungen bewirkende Frequenzanteile einer überlagernden Schwingung separiert werden, wobei die separierten, eine Signalverzerrung bewirkenden Frequenzanteile der überlagernden Schwingung in den Zeitbereich rücktransformiert werden und aus den rücktransformierten Frequenzanteilen der überlagernden Schwingung ein Maß für den Verschleißzustand und/oder die Schneidschärfe eines Häckselmessers abgeleitet wird, wird erreicht, dass mit einfachen Maßnahmen die Erfassung des Verschleißzustandes von Häckselmessern verbessert werden kann.

In einer vorteilhaften Ausgestaltung der Erfindung umfassen die Frequenzanteile die Amplitude und die Phase des jeweiligen Spannungssignals, sodass mittels bekannten mathematischer Analyseverfahren, vorzugsweise der Fourier-Analyse, eine schnelle Signalanalyse möglich wird.

Indem in einer vorteilhaften Weiterbildung der Erfindung mittels Fourier-Analyse das jeweilige Spannungssignal in Frequenzanteile einer Grundschwingung und Signalverzerrungen bewirkende Frequenzanteile einer überlagernden Schwingung klassifiziert wird und die die Grundschwingung repräsentierenden Frequenzanteile bei der Ableitung des Verschleißzustandes und/oder der Schneidschärfe des jeweiligen Häckselmessers nicht berücksichtigt werden, wird sichergestellt, dass nur diejenigen Frequenzanteile berücksichtigt werden, die sich in Abhängigkeit vom Verschleiß der Häckselmesser signifikant ändern und damit als Indikator für die Qualifizierung des Verschleißes bzw. der Messerschärfe geeignet sind. Eine besonders vorteilhafte Ausgestaltung ergibt sich in diesem Zusammenhang, wenn die Amplitude des jeweiligen Spannungssignals der eine Signalverzerrung bewirkenden Frequenzanteile berücksichtigt wird, da diese ein Maß für die Beurteilung des Verschleißzustandes und/oder der Schneidschärfe des jeweiligen Häckselmessers ist und auf einfache Weise ermittelbar ist.

Indem eine Sensoranordnung oder die mehreren Sensoranordnungen so am Umfang der Häckseltrommel positioniert sind, dass jedes Häckselmesser der Häckseltrommel durch eine Sensoranordnung detektiert wird, wird sichergestellt, dass jedes am Umfang der Häckseltrommel positionierte Häckselmesser detektiert werden kann. Dieser Effekt wird in einer weiteren vorteilhaften Ausgestaltung auch dadurch erreicht, dass der Häckseltrommel rechts- und linksseitige Häckselmesseranordnungen zugeordnet sind und jeder dieser Häckselmesseranordnungen zumindest eine Sensoranordnung zugeordnet ist.

Eine hochaufgelöste und damit sehr genaue Analyse des Verschleißzustandes bzw. der Messerschärfe wird in einer vorteilhaften Weiterbildung der Erfindung dadurch erreicht, dass jeder Sensoranordnung eine Vielzahl von Induktionssensoren, vorzugsweise 5 Induktionssensoren, zugeordnet sind und jeder Induktionssensor ein Spannungssignal generiert, wobei vorzugsweise jedes der generierten Spannungssignale separat analysiert wird und wobei weiter vorzugsweise mehrere oder alle Spannungssignale eines detektierten Häckselmessers vor einer Analyse zu einem oder mehreren Spannungssignalen zusammengefasst werden.

Auf einfache Weise kann der Schärfe- oder Verschleißzustand des Häckselmessers dann ermittelt werden, wenn in der Auswerteinheit und/oder einer sonstigen Datenverarbeitungseinrichtung ein Sollwert "scharfes Messer" hinterlegt ist und dass bei Unterschreiten dieses Sollwertes ein Schleifsignal generiert wird, weiter vorzugsweise, dass der Sollwert eine Amplitude des generierten Spannungssignals bildet. In diesem Zusammenhang ist es auch von Vorteil, wenn alternativ oder zusätzlich die Generierung eines Schleifsignals vorzugsweise die Generierung eines Hinweissignals, vorzugsweise die Visualisierung derjenigen Häckselmesser umfasst, die den Sollwert unterschreiten.

Eine besondere Entlastung des Bedieners der landwirtschaftlichen Erntemaschine wird in einer vorteilhaften Ausgestaltung der Erfindung auch dadurch erreicht, dass die Generierung eines Schleifsignals weiter vorzugsweise eine Auslösung eines Schleifvorganges umfasst.

Eine besonders wirkungsvolle Überwachung des Verschleißzustandes bzw. der Häckselmesserschärfe, insbesondere mit Blick auf unterschiedliche an den Häckselmessern auftretende Verschleißarten, wird in einer vorteilhaften Weiterbildung der Erfindung dann möglich, wenn die Beurteilung der Schneidschärfe mittels Bewertungskriterien erfolgt, wobei die Bewertungskriterien eines oder mehrere der Bewertungskriterien "Schleifflächenlänge des jeweiligen Häckselmessers", "Rundheit der Häckselmesserspitze", "allgemeiner Messerverschleiß" und/oder "Balligkeit des Häckselmessers" bzw. "relativer Abstand der Gegenschneide zum Häckselmesser" sind.

In einer vorteilhaften Ausgestaltung der Erfindung ist in der Auswerteinheit und/oder einer sonstigen Datenverarbeitungseinrichtung für jedes Bewertungskriterium ein Sollwert hinterlegt, wobei beim Unterschreiten dieses Sollwertes ein Schleifsignal und/oder ein Messerwechselsignal generiert wird, weiter vorzugsweise, dass der Sollwert eine Amplitude des generierten Spannungssignals bildet, sodass optimal nach dem jeweils gewählten Bewertungskriterium geregelt werden kann. In diesem Zusammenhang ist es von Vorteil, wenn in einer vorteilhaften Weiterbildung der Erfindung die Generierung eines Schleifsignals vorzugsweise die Generierung eines Hinweissignals, vorzugsweise die Visualisierung derjenigen Häckselmesser umfasst, die den Sollwert unterschreiten.

Eine besondere Entlastung des Bedieners der landwirtschaftlichen Erntemaschine wird in einer vorteilhaften Ausgestaltung der Erfindung auch dadurch erreicht, dass die Generierung eines Schleifsignals weiter vorzugsweise eine Auslösung eines Schleifvorganges und/oder den Hinweis auf Austausch eines Häckselmessers umfasst.

Aufgrund dessen, dass mit zunehmender Rundheit der Schneidkante der Häckselmesser die induzierte Spannung steigt ist in einer vorteilhaften Weiterbildung der Erfindung vorgesehen, dass bei Wahl des Bewertungskriteriums "Rundheit der Häckselmesserspitze" der Sollwert eine Amplitude des generierten Spannungssignals ist.

Da mit abnehmender Schleifflächenlänge des Häckselmessers die Schwingungsdauer der induzierten Spannung zunimmt ist in einer vorteilhaften Ausgestaltung der Erfindung vorgesehen, dass bei Wahl des Bewertungskriteriums "Schleifflächenlänge des jeweiligen Häckselmessers" der Sollwert eine Schwingungsdauer des generierten Spannungssignals ist.

Aufgrund dessen, dass bei zunehmendem allgemeinen Verschleiß des Häckselmessers sowohl die Schwingungsdauer als auch die Amplitude der induzierten Spannung signifikant zunehmen, ist in einer weiteren vorteilhaften Ausgestaltung der Erfindung vorgesehen, dass bei Wahl des Bewertungskriteriums "allgemeiner Messerverschleiß" der Sollwert eine Amplitude und eine Schwingungsdauer des generierten Spannungssignals umfasst.

Mit zunehmendem Verschleiß der Häckselmesser vergrößert sich deren Abstand zur Gegenschneide und die Amplitude der induzierten Spannung nimmt signifikant ab, sodass in einer weiteren vorteilhaften Ausgestaltung vorgesehen ist, dass bei Wahl des Bewertungskriteriums "Balligkeit des Häckselmessers" bzw. "relativer Abstand der Gegenschneide zum Häckselmesser" der Sollwert eine Amplitude des generierten Spannungssignals ist.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: einen Feldhäcksler mit erfindungsgemäßer Schneidschärfendetektionseinrichtung
- Figur 2: eine Detailansicht des Feldhäckslers nach Figur 1 mit erfindungsgemäßer Schneidschärfendetektionseinrichtung
- Figur 3: eine Detailansicht der induktiven Sensoranordnung
- Figur 4: eine schematische Ansicht der erfindungsgemäßen Frequenzanalyse
- Figur 5: eine Detaildarstellung der erfindungsgemäßen Frequenzanalyse
- Figur 6: eine weitere Detaildarstellung der erfindungsgemäßen Frequenzanalyse
- Figur 7: eine schematische Darstellung einer Anwendung der erfindungsgemäßen Frequenzanalyse

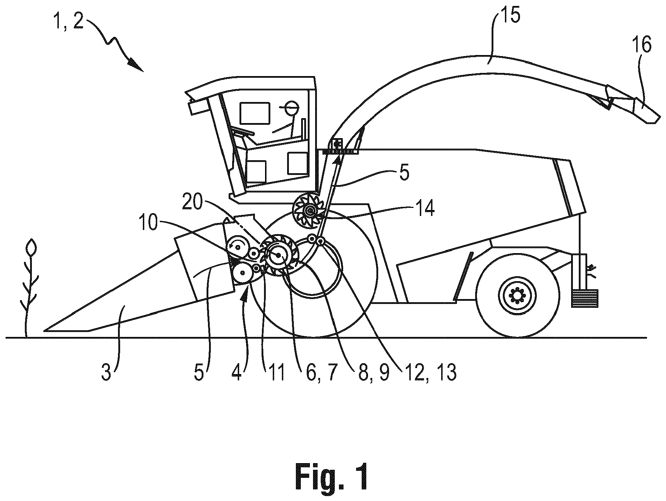

Figur 1 zeigt schematisch eine als Feldhäcksler 2 ausgeführte landwirtschaftliche Arbeitsmaschine 1, die in ihrem frontseitigen Bereich einen Erntevorsatz 3 aufnimmt. Im rückwärtigen Bereich des Erntevorsatzes 3 sind diesem sogenannte Einzugs- und Vorpresswalzen 4 zugeordnet, die den Erntegutstrom 5 aus dem Erntevorsatz 3 kommend annehmen, verdichten und in ihrem rückwärtigen Bereich an eine Häckseleinrichtung 6 übergeben. In noch näher zu beschreibender Weise umfasst die Häckseleinrichtung 6 eine Häckseltrommel 7, die mit Häckselmessern 8 einer Häckselmesseranordnung 9 bestückt ist. Die umlaufenden Häckselmesser 8 werden im Einzugsbereich 10 der Häckseltrommel 7 an einer sogenannten Gegenschneide 11, über die der zu zerkleinernde Erntegutstrom 5 gefördert wird, vorbeibewegt. Im rückwärtigen Bereich der Häckseltrommel 7 wird das zerkleinerte Erntegut 5 sodann entweder an eine als sogenannter Cracker 12 ausgeführte Nachzerkleinerungseinrichtung 13 oder direkt an eine Nachbeschleunigungseinrichtung 14 übergeben. Während die Nachzerkleinerungseinrichtung 13 die körnigen Bestandteile des Erntegutstromes 5, etwa Maiskörner, weiter zerkleinert beschleunigt der Nachbeschleuniger 14 den Erntegutstrom 5 in einer Weise, dass dieser durch einen Auswurfkrümmer 15 bewegt und endseitig im Bereich einer Auswurfklappe 16 aus dem Feldhäcksler 2 austreten und an ein nicht dargestelltes Transportfahrzeug übergeben werden kann.

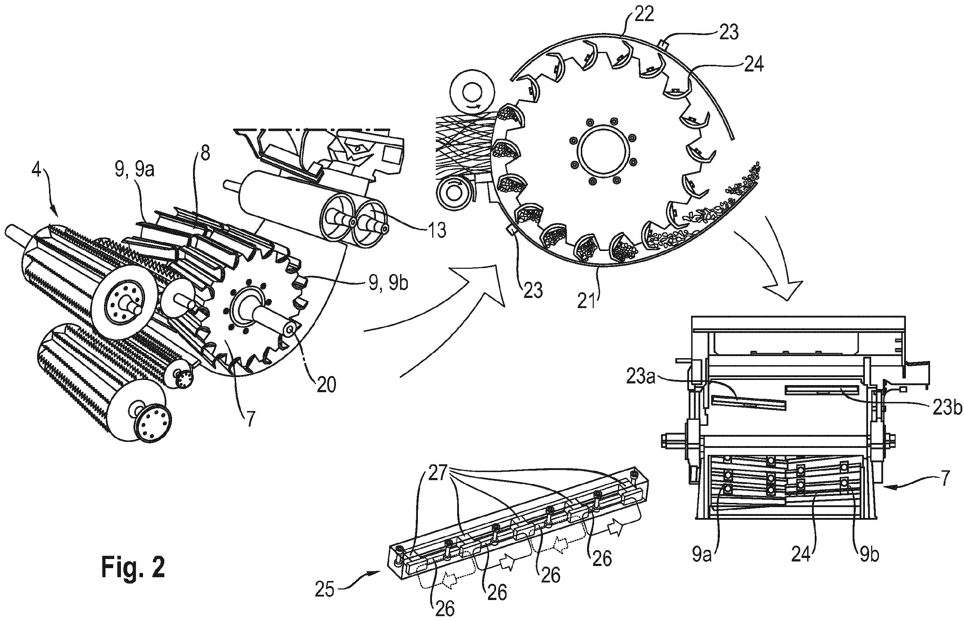

Gemäß Figur 2 umfasst die Häckselmesseranordnung 9 rechts- und linksseitige Häckselmesseranordnungen 9a, 9b, wobei jede Häckselmesseranordnung 9a, 9b eine Vielzahl am Umfang der Häckseltrommel 7 schräg zur Drehachse 20 der Häckseltrommel 7 positionierte Häckselmesser 8 umfasst. Die Häckseltrommel 7 wird untenseitig von einem vorzugsweise aus Edelstahl bestehenden Trommelboden 21 ummantelt. Obenseitig wird die Häckseltrommel 7 von einer vorzugsweise ebenfalls aus Edelstahl bestehenden Trommelrückwand 22 umschlossen. Die erfindungsgemäße und im Folgenden noch näher zu beschreibende Sensoranordnung 23 kann gemäß dem in Figur 2 dargestellten Ausführungsbeispiel entweder an der Trommelrückwand 22 oder am Trommelboden 21 positioniert sein. Es ist auch denkbar, dass zugleich sowohl am Trommelboden 21 als auch an der Trommelrückwand 22 eine Sensoranordnung 23 angeordnet ist. Unabhängig von der konkreten Positionierung sind jeder Häckseltrommel 7 zumindest 2 Sensoranordnungen 23a, 23b in der Weise zugeordnet, dass jeweils eine der Sensoranordnungen 23a, 23b der jeweils zugehörigen Häckselmesseranordnung 9a, 9b zugeordnet ist, wobei jede Sensoranordnung 23a, 23b die Schneidkante 24 des jeweiligen Häckselmessers 7 vollständig überdeckt, sodass jede Schneidkante 24 über ihrer gesamten Länge durch die jeweilige Sensoranordnung 23a, 23b detektiert werden kann. Weiter liegt es im Rahmen der Erfindung, dass die jeweilige Sensoranordnung 23a, 23b entweder parallel zur Drehachse 20 der Häckseltrommel 7 oder parallel zur Schneidkante 24 der Häckselmesser 8 am Trommelboden 21 und/oder der Trommelrückwand 22 positioniert ist. Die rechte untere Darstellung in Figur 2 zeigt nur beispielhaft die möglichen Ausrichtungen der Sensoranordnungen 23a, 23b in einer einzigen Darstellung. Vorzugsweise werden alle Sensoranordnungen 23a, 23b entweder parallel zur Drehachse 20 der Häckseltrommel 7 oder parallel zur Schneidkante 24 der Häckselmesser 8 positioniert sein. Im dargestellten Ausführungsbeispiel sind die Sensoranordnungen 23a, 23b als im Folgenden noch näher zu beschreibende Induktionssensoren 25 ausgeführt, wobei jede Sensoranordnung 23 ein oder mehrere magnetische Erregeranordnungen 26 sowie jeweils eine mit diesen zusammenwirkende Polanordnung 27 umfasst.

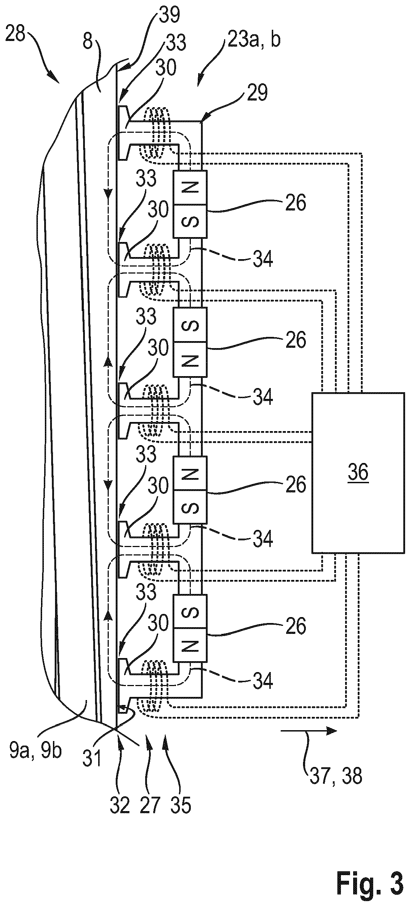

Figur 3 erläutert einige, für das Verständnis der Erfindung wesentliche Eigenschaften der Sensoranordnungen 23a, 23b, wobei sich die weiteren Details zu den Sensoranordnungen aus der DE 10 2017 103 537 A1 ergeben, auf deren Offenbarungsgehalt hiermit vollumfänglich Bezug genommen wird. Die erfindungsgemäße Erfassungsanordnung 28 zur Erfassung eines Verschleißzustandes einer Häckselmesseranordnung 9a, 9b umfasst eine Vielzahl von Sensoranordnungen 23a, 23b, vorzugsweise für jede Häckselmesseranordnung 9a, 9b eine. Jede Sensoranordnung 23a, 23b wird von einer Vielzahl magnetischer Erregeranordnungen 26 gebildet, die mit einer Flussleiteinrichtung 29 gekoppelt sind. Die jeweilige Sensoranordnung 23a, 23b stellt jeweils eine Polanordnung 27 bereit, die mindestens einen magnetischen Pol 30, vorzugsweise fünf magnetische Pole 30, mit jeweils einer Polfläche 31 zum Ausleiten von Magnetfluss ausbildet. Bei einer Drehung der Häckseltrommel 7 passiert ein Häckselmesser 8 die jeweilige Polanordnung 27, wobei das die Polanordnung 27 jeweils passierende Häckselmesser 8 eine Luftspaltanordnung 32 mit mindestens einem Luftspalt 33 zu der Polanordnung 27 hin ausbildet und dadurch mindestens ein von der Erregeranordnung 26 erregter Magnetkreis 34 über das jeweilige Häckselmesser 8 geschlossen wird. Die Erfassungsanordnung 28 weist zudem eine Messanordnung 35 und eine Auswerteeinheit 36 auf. In erfindungsgemäßer und noch näher zu erläuternden Weise erfasst die Messanordnung 35 mindestens eine magnetische Messgröße 37 betreffend den Magnetfluss, vorzugsweise eine induzierte Spannung 38, in mindestens einem von der Erregeranordnung 26 erregten Magnetkreis 34 und die Auswerteeinheit 36 ermittelt aus der mindestens einen erfassten Messgröße 37 den Verschleißzustand 39 des jeweiligen Häckselmessers 8.

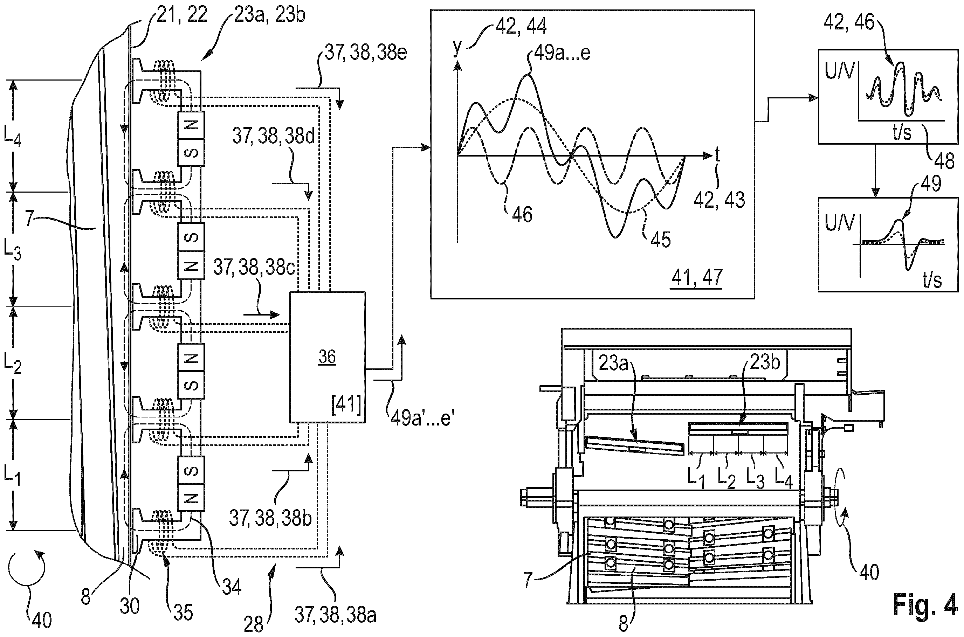

Figur 4 beschreibt nun Details der erfindungsgemäßen Vorrichtung. Im Betrieb der Häckseltrommel 7 werden die Häckselmesser 8 gemäß der Drehrichtung 40 der Häckseltrommel 7 an der jeweiligen Sensoranordnung 23a, 23b vorbeigeführt. Aufgrund der nahezu unmagnetischen Eigenschaften der vorzugsweise aus Edelstahl bestehenden Trommelrückwand 22 oder des Trommelbodens 21 durchdringen die von benachbarten magnetischen Polen 30 gebildeten Magnetkreise 34 das jeweils die Sensoranordnung 23a, 23b überstreichende Häckselmesser 8. Im dargestellten Ausführungsbeispiel bilden sich zwischen den fünf Polen 30 vier Magnetkreise 34 aus, die das jeweilige Häckselmesser in vier Abschnitten L1 bis L4 durchdringen. Für jeden dieser Abschnitte L1 bis L4 wird in der diesem zugeordneten Messanordnung 35 eine Spannung 38, die magnetische Messgröße 37, induziert. Die der Erfassungsanordnung 28 zugeordnete Auswerteinheit 36 ermittelt jeweils die abschnittsweise Induktionsspannung 38a-e und zeichnet diese auf. In diesem Zusammenhang liegt es im Rahmen der Erfindung, dass die jeweilige Sensoranordnung 23 mehr oder weniger als die offenbarten fünf magnetischen Pole 30 aufweist, sodass sich auch mehr oder weniger als die fünf induzierten Spannungen 38a-e ergeben können. Es liegt auch im Rahmen der Erfindung, dass die Spannungssignale 38a-e zu einem oder mehreren Spannungssignalen 38 je detektiertem Häckselmesser 8 zusammengefasst werden können.

In der Auswerteinheit 36 wird das jeweilige Spannungssignal 38a..e in ein weiterverarbeitbares Spannungssignal 49a..e umgerechnet. Dieses weiterverarbeitbare Spannungssignal 49a..e wird in der Weise gebildet, dass zunächst für ein scharfes, nicht verschlissenes Häckselmesser 8 die induzierte Spannung 38, der sogenannte Sollwert 38 der induzierten Spannung ermittelt wird, sodann im Betrieb des Häckselmessers 8 die sich verschleißbedingt ändernde Induktionsspannung 38a..e ermittelt wird und schließlich aus der Differenz der verschleißbedingten Änderung der Induktionsspannung 38a..e minus des Sollwertes 38 der induzierten Spannung eines nicht verschlissenen Häckselmessers 8 die weiterverarbeitbaren Spannungssignale 49a..e ermittelt werden.

In der Auswerteinheit 36 wird sodann das jeweilige Spannungssignal 49a..e in an sich bekannter Weise mittels Frequenzanalyse 41, vorzugsweise mittels Fourier-Analyse 47, in seine Frequenzanteile 42, vorzugsweise Schwingungsdauer oder Phase 43 und Amplitude 44, zerlegt. Dabei wird das jeweils induzierte Spannungssignal 49a..e in Frequenzanteile 42 einer Grundschwingung 45 und in Signalverzerrungen bewirkende Frequenzanteile 42 einer überlagernden Schwingung 46 separiert. Sodann werden die separierten, eine Signalverzerrung bewirkenden Frequenzanteile 42, die sogenannte überlagernde Schwingung 46, in noch näher zu beschreibender Weise in den Zeitbereich 48 rücktransformiert und aus den rücktransformierten Frequenzanteilen 42 wird schließlich in ebenfalls noch näher zu beschreibender Weise ein Maß für die Schneidschärfen, den Verschleißzustand 39, eines Häckselmessers 8 abgeleitet.

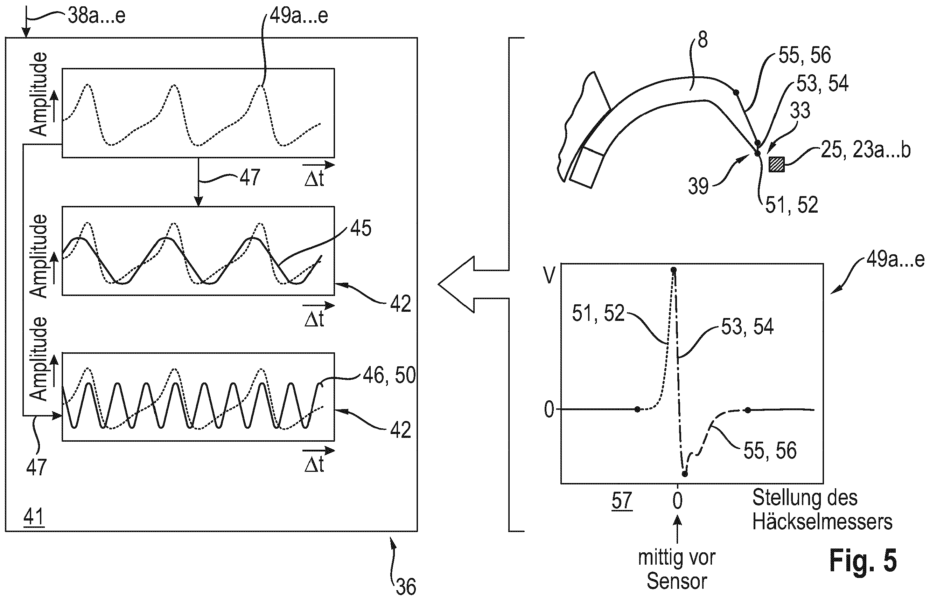

In Figur 5 ist schematisch die von der Auswerteinheit 36 vorgenommene erfindungsgemäße Frequenzanalyse 41 detailliert beschrieben. Zunächst wird das aus der induzierten Spannung 38a-e jeweils abgeleitete Spannungssignal 49a-e in der beschriebenen Weise abgeleitet. Sodann wird das jeweilige Spannungssignal 49a...e mittels Fourier-Analyse 47 in seine Frequenzanteile 42 zerlegt, wobei hier wie bereits beschrieben eine Grundschwingung 45 und eine oder mehrere die Signalverzerrungen bewirkende überlagernde Schwingungen 46, die sogenannten Oberschwingungen 50, separiert. Bewegt sich nun ein Häckselmesser 8 an der als Induktionssensor 25 ausgeführten Sensoranordnung 23a..b vorbei, so ändert das jeweilige Häckselmesser 8 die Permeabilität im Luftspalt 33 vor der Sensoranordnung 23a..b. Folglich ändert sich die magnetische Induktion. Diese Änderung lässt sich mithilfe der jeweils induzierten Spannung 38 a..e messen. Ein typisches Häckselmesser 8, unabhängig davon, ob seine Querschnittsform gewölbt oder eben gestaltet ist, umfasst im Wesentlichen drei charakteristische Bereiche. Der erste Bereich 51 definiert die Rundheit der Messerspitze 52 und wird von deren Radius bestimmt, wobei ein Häckselmesser 8 umso schärfer ist je geringer dieser Radius ausfällt. Einen weiteren Bereich 53 definiert die sogenannte Schleifflächenlänge 54, wobei hier eine zunehmende Schleifflächenlänge 54 ein Maß für einen zunehmenden Verschleiß 39 des jeweiligen Häckselmessers 8 ist. Schließlich wird als dritter Bereich 55 der sogenannte Messerrücken 56 unterschieden, dessen Form und Beschaffenheit als Maß zur Beschreibung des allgemeinen Verschleißzustandes 39 des jeweiligen Häckselmessers 8 herangezogen werden kann. Aus Vereinfachungsgründen werden im Folgenden der allgemeine Verschleißzustand und der Verschleiß einheitlich als Verschleiß 39 bezeichnet.

Für das im dargestellten Ausführungsbeispiel gewölbt ausgeführte Häckselmesser 8 ergibt sich die in Figur 5 rechts unten dargestellte Spannungssignal 49a..e, wobei das Spannungssignal 49a... e hier über der Winkelstellung 57 des Häckselmessers 8 zur jeweiligen Sensoranordnung 23 a..b dargestellt ist und die Winkelstellung 0° die mittige Positionierung des Häckselmessers 8 vor der jeweiligen Sensoranordnung 23a..b beschreibt.

Es ist zu erkennen, dass die beschriebenen charakteristischen Bereiche 51, 53, 55 unterschiedlich hohe Spannungen 49a..e induzieren, wobei der die Rundheit der Messerspitze beschreibende Bereich 51, 52 insgesamt die höchsten Spannung 49a..e induziert. Zugleich ist erkennbar, dass die Größe des Luftspaltes 33 einen Einfluss auf die induzierte Spannung 49a..e hat, wobei erwartungsgemäß der Wert der induzierten Spannung 49a..e mit zunehmenden Luftspalt 33 abnimmt. Die Signalform der induzierten Spannung 49a..e wird für jedes Messer akquiriert und separiert. Dies bedeutet, dass für jedes Häckselmesser 8 in Abhängigkeit von der Gestalt der Sensoranordnung 23a..b mehrere Spannungssignale 49a..e zur Verfügung stehen. Gemäß Figur 3 generiert jeder magnetische Pol 30 der Polanordnung 27 eine induzierte Spannung 38a..e. Diese induzierten Spannungen 38a..e werden sodann nach Umrechnung in die beschriebenen Spannungssignale 49a..e in der Auswerteinheit 36 der erfindungsgemäßen Frequenzanalyse 41 mittels Fourier-Analyse 47 unterzogen. Wie bereits beschrieben separiert die Fourier-Analyse 47 diese Spannungssignale 49a..e in Frequenzanteile 42 einer Grundschwingung 45 und Frequenzanteile 42 einer oder mehrerer die Signalverzerrungen bewirkenden überlagernden Schwingungen 46, die sogenannten Oberschwingungen 50.

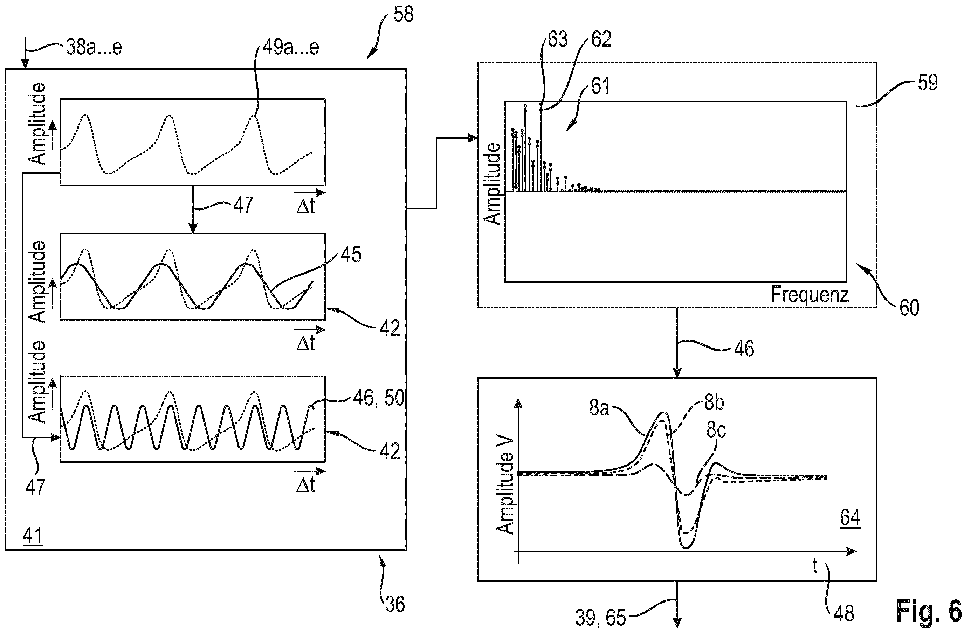

Figur 6 beschreibt die einzelnen Schritte der Frequenzanalyse 41 im Detail. Im ersten Analyseschritt 58 werden in der bereits beschriebenen Weise die induzierten Spannungen 38a..e als Spannungssignale 49a..e einer Fourier-Analyse 47 unterzogen und die Grundschwingung 45 sowie die überlagernde Schwingung 46, etwa eine oder mehrere der Oberschwingungen 50 ermittelt. Die in einem weiteren Analyseschritt 59 dargestellte Frequenzanalyse 60 unabhängig davon, ob es sich um eine Grundschwingung 45 oder eine überlagernde Schwingung 46 handelt, zeigt, dass sich die Amplituden 61 scharfer Messer 62 von denen stumpfer Messer 63 nur unwesentlich unterscheiden. In dem folgenden Analyseschritt 64 wird sodann erfindungsgemäß die ermittelte Grundschwingung 45 nicht mehr berücksichtigt und nur die eine Signalverzerrung bewirkenden Frequenzanteile 42 der überlagernden Schwingungen 46 werden in den Zeitbereich 48 rücktransformiert. Das Ergebnis dieser Rücktransformation ist in Analyseschritt 64 am Beispiel von drei Häckselmessern 8 mit unterschiedlich langer Häckselleistung beispielhaft visualisiert. Häckselmesser 8a hat dabei die größte Häckselleistung erbracht, während Häckselmesser 8b ca. 40 % und Häckselmesser 8c nur ca. 10 % der Häckselleistung von Häckselmesser 8a erbracht haben. Mithin kann aus den rücktransformierten Frequenzanteilen 42 der überlagernden Schwingungen 46 auf den Verschleißzustand 39 und damit auf die Schneidschärfe 65 eines jeden Häckselmesser 8 geschlossen werden.

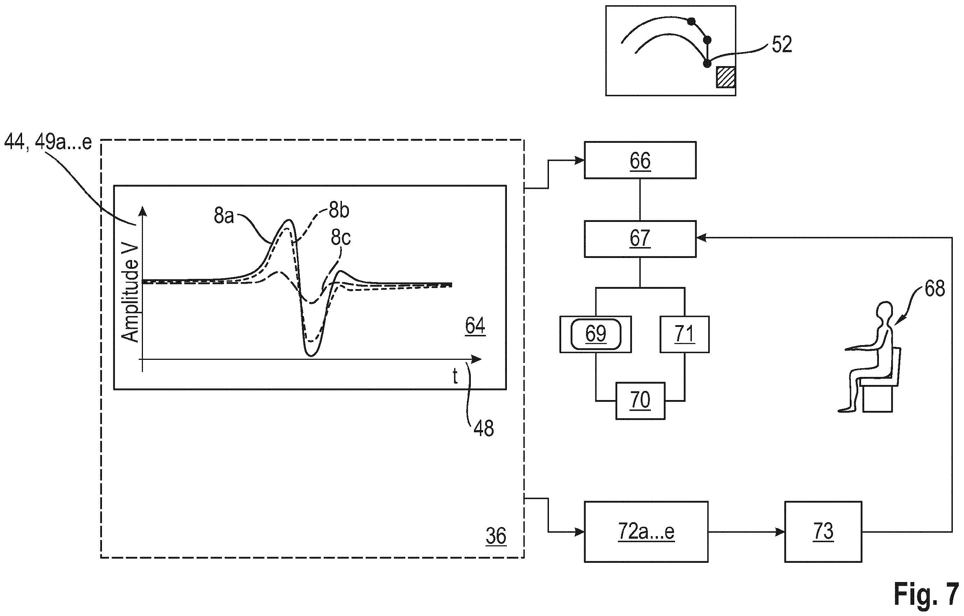

Figur 7 zeigt nun schematisch die Umsetzung einer Schneidschärfenregelung. Die Amplitude 44 der jeweils induzierten Spannung 38a..e und das daraus jeweils abgeleitete Spannungssignal 49a..e bildet, wie bereits erläutert, ein Maß für den Verschleißzustand 39 und analog die Schneidschärfe 65 eines Häckselmessers 8. Üblicher Weise gilt ein Häckselmesser 8 dann als scharf, wenn die Rundheit (der Radius) der Messerspitze 52 ca. 0,04 mm beträgt. Die in Figur 7 beispielhaft dargestellten Amplituden 44 der Häckselmesser 8a..c entsprechen Radien der Messerspitze 52 von ca. 0,1 mm - 0,25mm - 0,6mm, wobei eine zunehmender Rundheit 52 einem zunehmendem Verschleiß 39 und einer abnehmenden Schneidschärfe 65 entspricht. Im einfachsten Fall kann nun in der Auswerteinheit 36 oder in einer sonstigen Datenverarbeitungseinrichtung, auch externen Datenverarbeitungseinrichtung, ein Sollwert "scharfes Messer" 66 hinterlegt sein, wobei dies im einfachsten Fall ein hinterlegter Sollwert 66 der Amplitude 44 der induzierten Spannung 38a..e, 49a..e ist. Wird der Sollwert 66 unterschritten, wird sodann ein Schleifsignal 67 generiert, wobei hier wie nachfolgend ausgeführt verschiedene Arten der Generierung dieses Schleifsignals 67 denkbar sind. Im einfachsten Fall kann einem Bediener 68 an einem Display 69 visualisiert werden, welches oder welche Häckselmesser 8 den Schwellwert "scharfes Messer" unterschritten haben. In diesem Fall entscheidet der Bediener wann ein Schleifvorgang 70 der Häckselmesser 8 ausgelöst werden soll. Denkbar ist aber auch, dass eine Steuereinrichtung 71 die Einhaltung des Sollwerts "scharfes Messer" 66 überwacht und selbsttätig die Auslösung des Schleifvorganges 70 auslöst, wobei die automatische Auslösung des Schleifvorganges 70 vorzugsweise so definiert ist, dass eine Mindestzahl an Häckselmessern 8 den Sollwert 66 unterschreiten muss bevor ein Schleifvorgang 70 aktiviert wird. In an sich bekannter Weise wird hier zudem berücksichtigt, dass sich der Feldhäcksler 2 nicht in einem Arbeitsmodus befindet, indem Erntegut 5 durch den Feldhäcksler 2 bewegt wird.

Alternativ oder zusätzlich kann die Beurteilung des Verschleißzustandes 39 oder der Schneidschärfe 65 auch an Bewertungskriterien 72 gekoppelt sein. Vorzugsweise können die Bewertungskriterien eines oder mehrere der Bewertungskriterien "Schleifflächenlänge 54 des jeweiligen Häckselmessers 8" 72a, "Rundheit der Häckselmesserspitze 52" 72b, "allgemeiner Messerverschleiß 39" 72c und/oder "Balligkeit des Häckselmessers 8" 72d bzw. "relativer Abstand der Gegenschneide 11 zum Häckselmesser 8" 72e sein. In Analogie zu dem zuvor Beschriebenen kann auch bezüglich der Bewertungskriterien 72a..e in der Auswerteinheit 36 oder in einer sonstigen Datenverarbeitungseinrichtung, auch externen Datenverarbeitungseinrichtung, ein Sollwert 73 hinterlegt sein, wobei dies im einfachsten Fall ein hinterlegter Sollwert 73 der Amplitude 44 der induzierten Spannung 38a..e, 49a..e ist. In Abhängigkeit von dem gewählten oder einzigem hinterlegten Bewertungskriterium 72a..e kann der hinterlegte Sollwert 73 sodann entweder ein Maß für den Verschleißzustand 39 des jeweiligen Häckselmessers 8 insgesamt oder die Schärfe der Schneidkante 24 sein. Wird der Sollwert 73 unterschritten, wird sodann das bereits beschriebene Schleifsignal 67 generiert, wobei hier verschiedene Arten der Generierung dieses Schleifsignals 73 denkbar sind. Im einfachsten Fall kann einem Bediener 68 an einem Display 69 visualisiert werden, welches oder welche Häckselmesser 8 den Sollwert 73 unterschritten haben. In diesem Fall entscheidet der Bediener wann ein Schleifvorgang 70 der Häckselmesser 8 ausgelöst werden soll. Denkbar ist aber auch, dass eine Steuereinrichtung 71 die Einhaltung des Sollwerts 73 überwacht und selbsttätig die Auslösung des Schleifvorganges 70 auslöst, wobei die automatische Auslösung des Schleifvorganges 70 vorzugsweise so definiert ist, dass eine Mindestzahl an Häckselmessern 8 den Sollwert 73 unterschreiten muss bevor ein Schleifvorgang 70 aktiviert wird. In an sich bekannter Weise wird hier zudem berücksichtigt, dass sich der Feldhäcksler 2 nicht in einem Arbeitsmodus befindet, indem Erntegut 5 durch den Feldhäcksler 2 bewegt wird.

Sowohl bei Unterschreitung des Sollwertes 66 als auch des Sollwertes 73 kann alternativ oder zusätzlich der Austausch eines Häckselmessers 8 vorgeschlagen werden, nämlich vorzugsweise dann, wenn der Sollwert 66, 73 in so erheblichem Maß unterschritten ist, dass dies auf ein Ende des nutzbaren Bereichs des jeweiligen Häckselmessers 8 schließen lässt.

Aufgrund dessen, dass mit zunehmender Rundheit 52 der Schneidkante 24 der Häckselmesser 8 die induzierte Spannung 38a..e, das daraus abgeleitete Spannungssignal 49a..e steigt ist vorgesehen, dass bei Wahl des Bewertungskriteriums 72b "Rundheit der Häckselmesserspitze 52" der Sollwert 73 eine Amplitude 44 des ermittelten Spannungssignals 49a..e ist.

Da mit zunehmender Schleifflächenlänge 54 des Häckselmessers 8 die Schwingungsdauer 43 der induzierten Spannung 38a..e zunimmt ist bei Wahl des Bewertungskriteriums 72a "Schleifflächenlänge 54 des jeweiligen Häckselmessers 8" der Sollwert 73 eine Schwingungsdauer 43 des abgeleiteten Spannungssignals 49a..e.

Aufgrund dessen, dass bei zunehmendem allgemeinen Verschleiß 39 des Häckselmessers 8 sowohl die Schwingungsdauer 43 als auch die Amplitude 44 der induzierten Spannung 39a..e signifikant zunehmen, ist bei Wahl des Bewertungskriteriums 72c "allgemeiner Messerverschleiß" der Sollwert 73 eine Amplitude 44 und eine Schwingungsdauer 43 des ermittelten Spannungssignals 49a..e.

Mit zunehmendem Verschleiß 39 der Häckselmesser 8 vergrößert sich deren Abstand zur Gegenschneide 11 und die Amplitude 44 der induzierten Spannung 38a..e nimmt signifikant ab, sodass bei Wahl des Bewertungskriteriums 72d, e "Balligkeit des Häckselmessers 8" bzw. "relativer Abstand der Gegenschneide 11 zum Häckselmesser 8" der Sollwert 73 eine Amplitude des ermittelten Spannungssignals 49a..e ist.

**Bezugszeichenliste:**

| | | | |
|---|---|---|---|
| 1 | landwirtschaftliche Arbeitsmaschine | 33 | Luftspalt |
| 2 | Feldhäcksler | 34 | Magnetkreis |
| 3 | Erntevorsatz | 35 | Messanordnung |
| 4 | Einzugs- und Vorpresswalzen | 36 | Auswerteinheit |
| 5 | Erntegutstrom | 37 | magnetische Messgröße |
| 6 | Häckseleinrichtung | 38 | Sollwert induzierte Spannung |
| 7 | Häckseltrommel | 38a.e | induzierte Spannung |
| 8 | Häckselmesser | | |
| 9 | Häckselmesseranordnung a... b | 39 | Verschleißzustand |
| 10 | Einzugsbereich | 40 | Drehrichtung |
| 11 | Gegenschneide | 41 | Frequenzanalyse |
| 12 | Cracker | 42 | Frequenzanteil |
| 13 | Nachzerkleinerungseinrichtung | 43 | Schwingungsdauer/Phase |
| 14 | Nachbeschleunigungseinrichtung | 44 | Amplitude |
| 15 | Auswurfkrümmer | 45 | Grundschwingung |
| 16 | Auswurfkrümmerklappe | 46 | überlagernde Schwingung |
| 17 | | 47 | Fourier-Analyse |
| 18 | | 48 | Zeitbereich |
| 19 | | 49 | Spannungssignal a...e |
| 20 | Drehachse Häckseltrommel | 50 | Oberschwingung |
| 21 | Trommelboden | 51 | erster Bereich |
| 22 | Trommelrückwand | 52 | Rundheit der Messerspitze |
| 23 | Sensoranordnung a...b | 53 | weiterer Bereich |
| 24 | Schneidkante | 54 | Schleifflächenlänge |
| 25 | Induktionssensor | 55 | dritter Bereich |
| 26 | magnetische Erregeranordnung | 56 | Messerrücken |
| 27 | Polanordnung | 57 | Winkelstellung |
| 28 | Erfassungsanordnung | 58 | erster Analyseschritt |
| 29 | Flussleiteinrichtung | 59 | weiterer Analyseschritt |
| 30 | magnetischer Pol | 60 | Frequenzanalyse |
| 31 | Polfläche | 61 | Amplitude |
| 32 | Luftspaltanordnung | 62 | scharfes Messer |
| 63 | stumpfes Messer | | |
| 64 | Analyseschritt | | |
| 65 | Schneidschärfe | | |
| 66 | Sollwert "scharfes Messer" | | |
| 67 | Schleifsignal | | |
| 68 | Bediener | | |
| 69 | Display | | |
| 70 | Schleifvorgang | | |
| 71 | Steuereinrichtung | | |
| 72 | Bewertungskriterium a..e | | |
| 73 | Sollwert | | |
| L1..L4 | Abschnitte | | |

## Patentansprüche

1. Erfassungsanordnung (28) zur Erfassung eines Verschleißzustands (39) einer Häckselmesseranordnung (9a..b) einer zur Verarbeitung eines Gutstroms (5) vorgesehenen Häckseleinrichtung (6), wobei die Häckseleinrichtung (6) eine umlaufende, die Häckselmesseranordnung (9a..b) aufnehmende Häckseltrommel (7) sowie mindestens eine Gegenschneide (11), die mit den Häckselmessern (8) zusammenwirkt, aufweist,
wobei die Erfassungsanordnung (28) mindestens eine Sensoranordnung (23a..b) aufweist, die eine magnetische Erregeranordnung (26) und eine damit magnetisch gekoppelte Flussleiteinrichtung (29) aufweist, wobei die Sensoranordnung (23a..b) eine Polanordnung (27) bereitstellt, die mindestens einen magnetischen Pol (30) mit einer Polfläche (31) zum Ausleiten von Magnetfluss ausbildet wobei bei einer Drehung der Häckseltrommel (7) zumindest ein Teil der Häckselmesser (8) die Polanordnung (27) passiert, das die Polanordnung (27) jeweils passierende Häckselmesser (8) eine Luftspaltanordnung (32) mit mindestens einem Luftspalt (33) zu der Polanordnung (27) hin ausbildet und dadurch mindestens ein von der Erregeranordnung (26) erregter Magnetkreis (34) über das jeweilige Häckselmesser (8) geschlossen wird
wobei die Erfassungsanordnung (28) eine Messanordnung (35) und eine Auswerteeinheit (36) aufweist, wobei die Messanordnung (35) mindestens eine magnetische Messgröße (37) betreffend den Magnetfluss in mindestens einem von der Erregeranordnung (26) erregten Magnetkreis (34) erfasst und die Auswerteeinheit (36) aus der mindestens einen erfassten Messgröße (37) den Verschleißzustand (39) des jeweiligen Häckselmessers (8) ermittelt, wobei
die beim Überstreichen der Sensoranordnung (23a..b) durch eine Häckselmesseranordnung (9a..b) induzierte Spannung (38a..e) die magnetische Messgröße (37) bildet und die Erfassungsanordnung (28) die induzierte Spannung (38a..e) ermittelt und als Spannungssignal (49a..e) aufzeichnet,
**dadurch gekennzeichnet, dass**
das Spannungssignal (49a..e) in der Auswerteinheit (36) mittels Frequenzanalyse (41) in seine Frequenzanteile (42) zerlegt wird
die Frequenzanteile (42) in Frequenzanteile (42) einer Grundschwingung (45) und in Signalverzerrungen bewirkende Frequenzanteile (42) einer überlagernden Schwingung (46) separiert werden,
wobei die separierten, eine Signalverzerrung bewirkenden Frequenzanteile (42) der überlagernden Schwingung (46) in den Zeitbereich (48) rücktransformiert werden und aus den rücktransformierten Frequenzanteilen (42) der überlagernden Schwingung (46) ein Maß für den Verschleißzustand (39) und/oder die Schneidschärfe (65) eines Häckselmessers (8) abgeleitet wird.

2. Erfassungsanordnung zur Erfassung eines Verschleißzustands einer Häckselmesseranordnung nach Anspruch 1,
**dadurch gekennzeichnet, dass**
die Frequenzanteile (42) die Amplitude (44) und die Phase (43) des jeweiligen Spannungssignals (49a..e) umfassen.

3. Erfassungsanordnung zur Erfassung eines Verschleißzustands einer Häckselmesseranordnung nach einem der vorhergehenden Ansprüche,
**dadurch gekennzeichnet, dass**
die Frequenzanalyse (41) des Spannungssignals (49a..e) mittels Fourier-Analyse (47) erfolgt.

4. Erfassungsanordnung zur Erfassung eines Verschleißzustands einer Häckselmesseranordnung nach einem der vorhergehenden Ansprüche,
**dadurch gekennzeichnet, dass**
mittels Fourier-Analyse (47) das jeweilige Spannungssignal (49a..e) in Frequenzanteile (42) einer Grundschwingung (45) und eine Signalverzerrungen bewirkende Frequenzanteile (42) einer überlagernden Schwingung (46) klassifiziert wird und wobei die die Grundschwingung (45) repräsentierenden Frequenzanteile (42) bei der Ableitung des Verschleißzustandes (39) und/oder der Schneidschärfe (65) des jeweiligen Häckselmessers (8) nicht berücksichtigt werden.

5. Erfassungsanordnung zur Erfassung eines Verschleißzustands einer Häckselmesseranordnung nach Anspruch 4,
**dadurch gekennzeichnet, dass**
die Amplitude (44) des jeweiligen Spannungssignals (49a..e) der eine Signalverzerrung bewirkenden Frequenzanteile (42) ein Maß für die Beurteilung des Verschleißzustandes (39) und/oder der Schneidschärfe (65) des jeweiligen Häckselmessers (8) bildet.

6. Erfassungsanordnung zur Erfassung eines Verschleißzustands einer Häckselmesseranordnung nach Anspruch 1,
**dadurch gekennzeichnet, dass**
die eine Sensoranordnung (23a..b) oder die mehreren Sensoranordnungen (23a..b) so am Umfang der Häckseltrommel (7) positionierbar sind, dass jedes Häckselmesser (8) der Häckseltrommel (7) durch eine Sensoranordnung (23a..b) detektiert wird.

7. Erfassungsanordnung zur Erfassung eines Verschleißzustands einer Häckselmesseranordnung nach Anspruch 6,
**dadurch gekennzeichnet, dass**
der Häckseltrommel (7) rechts- und linksseitige Häckselmesseranordnungen (9a..b) zugeordnet sind und jeder dieser Häckselmesseranordnungen (9a..b) zumindest eine Sensoranordnung (23a..b) zuordenbar ist.

8. Erfassungsanordnung zur Erfassung eines Verschleißzustands einer Häckselmesseranordnung nach einem der vorhergehenden Ansprüche,
**dadurch gekennzeichnet, dass**
jeder Sensoranordnung (23a..b) eine Vielzahl von Induktionssensoren (25), vorzugsweise 5 Induktionssensoren (25), zugeordnet sind und jeder Induktionssensor (25) ein Spannungssignal (49a..e) generiert, wobei vorzugsweise jedes der generierten Spannungssignale (49a..e) separat analysiert wird und wobei weiter vorzugsweise mehrere oder alle Spannungssignale (49a..e) eines detektierten Häckselmessers (8) vor einer Analyse zu einem oder mehreren Spannungssignalen (49a..e) zusammengefasst werden.

9. Erfassungsanordnung zur Erfassung eines Verschleißzustands einer Häckselmesseranordnung nach einem der vorhergehenden Ansprüche,
**dadurch gekennzeichnet, dass**
in der Auswerteinheit (36) und/oder einer sonstigen Datenverarbeitungseinrichtung ein Sollwert "scharfes Messer" (66) hinterlegt ist und dass bei Unterschreiten dieses Sollwertes (66) ein Schleifsignal generiert wird, weiter vorzugsweise, dass der Sollwert (66) eine Amplitude (44) des generierten Spannungssignals (49a..e) bildet.

10. Erfassungsanordnung zur Erfassung eines Verschleißzustands einer Häckselmesseranordnung nach Anspruch 9,
**dadurch gekennzeichnet, dass**
die Generierung eines Schleifsignals (67) vorzugsweise die Generierung eines Hinweissignals, vorzugsweise die Visualisierung derjenigen Häckselmesser (8) umfasst, die den Sollwert (66) unterschreiten.

11. Erfassungsanordnung zur Erfassung eines Verschleißzustands einer Häckselmesseranordnung nach Anspruch 9,
**dadurch gekennzeichnet, dass**
die Generierung eines Schleifsignals (67) weiter vorzugsweise eine Auslösung eines Schleifvorganges (70) umfasst.

12. Erfassungsanordnung zur Erfassung eines Verschleißzustands einer Häckselmesseranordnung nach einem der vorhergehenden Ansprüche,
**dadurch gekennzeichnet, dass**
die Beurteilung der Schneidschärfe (65) und/oder des Verschleißzustandes (39) mittels Bewertungskriterien (72) erfolgt, wobei die Bewertungskriterien (72) eines oder mehrere der Bewertungskriterien "Schleifflächenlänge des jeweiligen Häckselmessers" (72a), "Rundheit der Häckselmesserspitze" (72b), "allgemeiner Messerverschleiß" (72c) und/oder "Balligkeit des Häckselmessers" (72d) bzw. "relativer Abstand der Gegenschneide zum Häckselmesser" (72e) sind.

13. Erfassungsanordnung zur Erfassung eines Verschleißzustands einer Häckselmesseranordnung nach Anspruch 12,
**dadurch gekennzeichnet, dass**
in der Auswerteinheit (36) und/oder einer sonstigen Datenverarbeitungseinrichtung für jedes Bewertungskriterium (72a..e) ein Sollwert (73) hinterlegt ist und dass bei Unterschreiten dieses Sollwertes (73) ein Schleifsignal (67) und/oder ein Messerwechselsignal generiert wird, weiter vorzugsweise, dass der Sollwert (73) eine Amplitude (44) des generierten Spannungssignals (49a..e) bildet

14. Erfassungsanordnung zur Erfassung eines Verschleißzustands einer Häckselmesseranordnung nach Anspruch 13,
**dadurch gekennzeichnet, dass**
die Generierung eines Schleifsignals (67) vorzugsweise die Generierung eines Hinweissignals, vorzugsweise die Visualisierung derjenigen Häckselmesser (8) umfasst, die den Sollwert (73) unterschreiten.

15. Erfassungsanordnung zur Erfassung eines Verschleißzustands einer Häckselmesseranordnung nach Anspruch 14,
**dadurch gekennzeichnet, dass**
die Generierung eines Schleifsignals (67) weiter vorzugsweise eine Auslösung eines Schleifvorganges (70) und/oder den Hinweis auf Austausch eines Häckselmessers (8) umfasst.

16. Erfassungsanordnung zur Erfassung eines Verschleißzustands einer Häckselmesseranordnung nach Anspruch 12,
**dadurch gekennzeichnet, dass**
bei Wahl des Bewertungskriteriums "Rundheit der Häckselmesserspitze" (72b) der Sollwert (73) eine Amplitude (44) des generierten Spannungssignals (49a..e) ist.

17. Erfassungsanordnung zur Erfassung eines Verschleißzustands einer Häckselmesseranordnung nach Anspruch 12,
**dadurch gekennzeichnet, dass**
bei Wahl des Bewertungskriteriums "Schleifflächenlänge des jeweiligen Häckselmessers" (72a) der Sollwert (73) eine Schwingungsdauer (43) der induzierten Spannung (44) ist.

18. Erfassungsanordnung zur Erfassung eines Verschleißzustands einer Häckselmesseranordnung nach Anspruch 12,
**dadurch gekennzeichnet, dass**
bei Wahl des Bewertungskriteriums "allgemeiner Messerverschleiß" (72c) der Sollwert (73) eine Amplitude (44) und eine Schwingungsdauer (43) des generierten Spannungssignals (49a..e) umfasst.

19. Erfassungsanordnung zur Erfassung eines Verschleißzustands einer Häckselmesseranordnung nach Anspruch 12,
**dadurch gekennzeichnet, dass**
bei Wahl des Bewertungskriteriums "Balligkeit des Häckselmessers" (72d) bzw. "relativer Abstand der Gegenschneide zum Häckselmesser" (72e) der Sollwert (73) eine Amplitude (44) des generierten Spannungssignals (49a..e) ist.

## Claims

1. A detection assembly (28) for detecting a wear status (39) of a chopping knife assembly (9a..b) of a chopping device (6) provided for processing a flow of material (5), wherein the chopping device (6) has a rotary chopping drum (7) receiving the chopping knife assembly (9a..b) as well as at least one counter cutter (11) which cooperates with the chopping knives (8), wherein the detection assembly (28) comprises at least one sensor assembly (23a..b) which has a magnetic excitation assembly (26) and a flux conducting device (29) magnetically coupled thereto, wherein the sensor assembly (23a..b) provides a pole assembly (27) which forms at least one magnetic pole (30) with a pole surface (31) for conducting magnetic flux out, wherein, during a rotation of the chopping drum (7), at least a portion of the chopping knife (8) passes the pole assembly (27), wherein each chopping knife (8) passing the pole assembly (27) forms an air gap assembly (32) with at least one air gap (33) towards the pole assembly (27), and at least one magnetic circuit (34) excited by the excitation assembly (26) is accordingly closed via the respective chopping knife (8), wherein the detection assembly (28) has a measuring assembly (35) and an evaluation unit (36), wherein the measuring assembly (35) detects at least one measured magnetic variable (37) relating to the magnetic flux in at least one magnetic circuit (34) which is excited by the excitation assembly (26) and the evaluation unit (36) determines the wear status (39) of the respective chopping knife (8) from the at least one detected measured magnetic variable (37), wherein
the voltage (38a..e) induced when a chopping knife assembly (9a..b) sweeps over the sensor assembly (23a..b) forms the measured magnetic variable (37) and the detection assembly (28) determines the induced voltage (38a..e) and records it as a voltage signal (49a..e),
**characterized in that**
the voltage signal (49a..e) is resolved into its frequency components (42) in the evaluation unit (36) by means of frequency analysis (41),
the frequency components (42) are separated into frequency components (42) of a fundamental oscillation (45) and into frequency components (42) of an superimposed oscillation (46) which cause distortions in the signal,
wherein the separated frequency components (42) of the superimposed oscillation (46) which cause a distortion in the signal are inverse transformed in the time domain, and a measure of the wear status (39) and/or the cutting sharpness (65) of a chopping knife (8) is derived from the inverse transformed frequency components (42) of the superimposed oscillation (46).

2. The detection assembly for detecting a wear status of a chopping knife assembly according to claim 1,
**characterized in that**
the frequency components (42) comprise the amplitude (44) and the phase (43) of the respective voltage signal (49a..e).

3. The detection assembly for detecting a wear status of a chopping knife assembly according to one of the preceding claims,
**characterized in that**
the frequency analysis (41) of the voltage signal (49a..e) is carried out by means of Fourier analysis (47).

4. The detection assembly for detecting a wear status of a chopping knife assembly according to one of the preceding claims,
**characterized in that**
by means of Fourier analysis (47), the respective voltage signal (49a..e) is classified into frequency components (42) of a fundamental oscillation (45) and frequency components (42) of a superimposed oscillation (46) which cause signal distortions, and wherein the frequency components (42) representing the fundamental oscillation (45) are not taken into account in the derivation of the wear status (39) and/or of the cutting sharpness (65) of the respective chopping knife (8).

5. The detection assembly for detecting a wear status of a chopping knife assembly according to claim 4,
**characterized in that**
the amplitude (44) of the respective voltage signal (49a..e) of the frequency components (42) causing a signal distortion forms a measure for the assessment of the wear status (39) and/or the cutting sharpness (65) of the respective chopping knife (8).

6. The detection assembly for detecting a wear status of a chopping knife assembly according to claim 1,
**characterized in that**
the one sensor assembly (23a..b) or the plurality of sensor assemblies (23a..b) can be positioned at the circumference of the chopping drum (7) in a manner such that every chopping knife (8) of the chopping drum (7) is detected by a sensor assembly (23a..b).

7. The detection assembly for detecting a wear status of a chopping knife assembly according to claim 6,
**characterized in that**
right hand side and left hand side chopping knife assemblies (9a..b) are associated with the chopping drum (7), and a sensor assembly (23a..b) can be associated with each of these chopping knife assemblies (9a..b).

8. The detection assembly for detecting a wear status of a chopping knife assembly according to one of the preceding claims,
**characterized in that**
a plurality of induction sensors (25), preferably 5 induction sensors (25), are associated with each sensor assembly (23a..b) and each induction sensor (25) generates a voltage signal (49a..e), wherein preferably, each of the generated voltage signals (49a..e) is analysed separately, and wherein more preferably, some or all of the voltage signals (49a..e), of a detected chopping knife (8) are combined to form one or more voltage signals (49a..e) prior to an analysis.

9. The detection assembly for detecting a wear status of a chopping knife assembly according to one of the preceding claims,
**characterized in that**
a "sharp knife" nominal value (66) is stored in the evaluation unit (36) and/or in another data processing device, and **in that** when this nominal value (66) is not attained, a grinding signal is generated, more preferably **in that** the nominal value (66) forms an amplitude (44) of the generated voltage signal (49a..e).

10. The detection assembly for detecting a wear status of a chopping knife assembly according to claim 9,
**characterized in that**
the generation of a grinding signal (67) preferably includes the generation of a warning signal, preferably the visualization of that chopping knife (8) which does not attain the nominal value (66).

11. The detection assembly for detecting a wear status of a chopping knife assembly according to claim 9,
**characterized in that**
the generation of a grinding signal (67) more preferably comprises triggering a grinding process (70).

12. The detection assembly for detecting a wear status of a chopping knife assembly according to one of the preceding claims,
**characterized in that**
the assessment of the cutting sharpness (65) and/or of the wear status (39) is carried out by means of evaluation criteria (72), wherein the evaluation criteria (72) are one or more of the evaluation criteria "grinding surface length of the respective chopping knife" (72a), "roundness of the chopping knife tip" (72b), "general knife wear" (72c) and/or "convexity of the chopping knife" (72d) or "relative separation of the counter cutter with respect to the chopping knife" (72e).

13. The detection assembly for detecting a wear status of a chopping knife assembly according to claim 12,
**characterized in that**
a nominal value (73) is stored in the evaluation unit (36) and/or another data processing device for every evaluation criterion (72a..e), and **in that** a grinding signal (67) and/or a knife change signal is generated when this nominal value (73) is not attained, more preferably **in that** the nominal value (73) forms an amplitude (44) of the generated voltage signal (49a..e).

14. The detection assembly for detecting a wear status of a chopping knife assembly according to claim 13,
**characterized in that**
the generation of a grinding signal (67) preferably includes the generation of a warning signal, preferably the visualization of that chopping knife (8) which does not attain the nominal value (66).

15. The detection assembly for detecting a wear status of a chopping knife assembly according to claim 14,
**characterized in that**
the generation of a grinding signal (67) more preferably comprises triggering a grinding process (70) and/or the warning to change a chopping knife (8).

16. The detection assembly for detecting a wear status of a chopping knife assembly according to claim 12,
**characterized in that**
when the evaluation criterion "roundness of the chopping knife tip" (72b) is selected, the nominal value (73) is an amplitude (44) of the generated voltage signal (49a..e).

17. The detection assembly for detecting a wear status of a chopping knife assembly according to claim 12,
**characterized in that**
when the evaluation criterion "grinding surface length of the respective chopping knife" (72a) is selected, the nominal value (73) is an oscillation period (43) of the induced voltage (44).

18. The detection assembly for detecting a wear status of a chopping knife assembly according to claim 12,
**characterized in that**
when the evaluation criterion "general knife wear" (72c) is selected, the nominal value (73) comprises an amplitude (44) and an oscillation period (43) of the generated voltage signal (49a..e).

19. The detection assembly for detecting a wear status of a chopping knife assembly according to claim 12,
**characterized in that**
when the evaluation criterion "convexity of the chopping knife" (72d) or "relative separation of the counter cutter with respect to the chopping knife" (72e) is selected, the nominal value (73) is an amplitude (44) of the generated voltage signal (49a..e).

## Revendications

1. Agencement de détection (28) pour la détection d'un état d'usure (39) d'un agencement de couteaux de hachage (9a..b) d'un équipement de hachage (6) prévu pour le traitement d'un flux de produit (5), l'équipement de hachage (6) comportant un tambour hacheur tournant (7) recevant l'agencement de couteaux de hachage (9a..b) ainsi qu'au moins une contre-lame (11) qui coopère avec les couteaux de hachage (8), l'agencement de détection (28) comportant au moins un agencement de capteurs (23a..b) qui comporte un agencement d'excitateur magnétique (26) et un équipement de conducteur de flux (29) couplé magnétiquement à celui-ci, l'agencement de capteurs (23a..b) fournissant un agencement polaire (27) qui forme au moins un pôle magnétique (30) avec une surface polaire (31) pour évacuer du flux magnétique
lors d'une rotation du tambour hacheur (7), au moins une partie des couteaux de hachage (8) passant devant l'agencement polaire (27), le couteau de hachage (8) qui passe respectivement devant l'agencement polaire (27) créant un agencement d'entrefer (32) avec au moins un entrefer (33) en direction de l'agencement polaire (27) et au moins un circuit magnétique (34) excité par l'agencement d'excitateur (26) étant ainsi fermé par l'intermédiaire du couteau de hachage respectif (8)
l'agencement de détection (28) comportant un agencement de mesure (35) et une unité d'analyse (36), l'agencement de mesure (35) détectant au moins une grandeur de mesure magnétique (37) concernant le flux magnétique dans au moins un circuit magnétique (34) excité par l'agencement d'excitateur (26) et l'unité d'analyse (36) déterminant à partir de la au moins une grandeur de mesure détectée (37) l'état d'usure (39) du couteau de hachage respectif (8),
la tension (38a..e) induite par un agencement de couteaux de hachage (9a..b) lors du balayage de l'agencement de capteurs (23a..b) formant la grandeur de mesure magnétique (37) et l'agencement de détection (28) déterminant la tension induite (38a..e) et l'enregistrant comme signal de tension (49a..e),
**caractérisé en ce que**,
dans l'unité d'analyse (36), le signal de tension (49a..e) est décomposé en ses composantes de fréquences (42) au moyen d'une analyse fréquentielle (41)
les composantes de fréquences (42) étant séparées en composantes de fréquences (42) d'une vibration fondamentale (45) et en composantes de fréquences (42), génératrices de distorsions de signaux, d'une vibration superposée (46),
les composantes de fréquences séparées (42), génératrices d'une distorsion de signal, de la vibration superposée (46) étant retransformées dans la plage temporelle (48) et à partir des composantes de fréquences retransformées (42) de la vibration superposée (46) étant déduite une mesure pour l'état d'usure (39) et/ou pour le tranchant (65) d'un couteau de hachage (8).

2. Agencement de détection pour la détection d'un état d'usure d'un agencement de couteaux de hachage selon la revendication 1,
**caractérisé en ce que**
les composantes de fréquences (42) incluent l'amplitude (44) et la phase (43) du signal de tension respectif (49a..e).

3. Agencement de détection pour la détection d'un état d'usure d'un agencement de couteaux de hachage selon une des revendications précédentes,
**caractérisé en ce que**
l'analyse fréquentielle (41) du signal de tension (49a..e) s'effectue au moyen d'une analyse de Fourier (47).

4. Agencement de détection pour la détection d'un état d'usure d'un agencement de couteaux de hachage selon une des revendications précédentes,
**caractérisé en ce que**,
au moyen d'une analyse de Fourier (47), le signal de tension respectif (49a..e) est classifié en composantes de fréquences (42) d'une vibration fondamentale (45) et en une composantes de fréquences (42), génératrices de distorsions de signaux, d'une vibration superposée (46), et les composantes de fréquences (42) représentant la vibration fondamentale (45) n'étant pas prises en compte lors de la déduction de l'état d'usure (39) et/ou du tranchant (65) du couteau de hachage respectif (8).

5. Agencement de détection pour la détection d'un état d'usure d'un agencement de couteaux de hachage selon la revendication 4,
**caractérisé en ce que**
l'amplitude (44) du signal de tension respectif (49a..e) des composantes de fréquences (42) génératrice d'une distorsion de signal forme une mesure pour apprécier l'état d'usure (39) et/ou du tranchant (65) du couteau de hachage respectif (8) .

6. Agencement de détection pour la détection d'un état d'usure d'un agencement de couteaux de hachage selon la revendication 1,
**caractérisé en ce que**
le un agencement de capteurs (23a..b) ou les plusieurs agencements de capteurs (23a..b) sont positionnables sur la périphérie du tambour hacheur (7), de façon que chaque couteau de hachage (8) du tambour hacheur (7) soit détecté par un agencement de capteurs (23a..b).

7. Agencement de détection pour la détection d'un état d'usure d'un agencement de couteaux de hachage selon la revendication 6,
**caractérisé en ce que**
au tambour hacheur (7) sont associés des agencements de couteaux de hachage droit et gauche (9a..b) et à chacun de ces agencements de couteaux de hachage (9a..b) est associable au moins un agencement de capteurs (23a..b).

8. Agencement de détection pour la détection d'un état d'usure d'un agencement de couteaux de hachage selon une des revendications précédentes,
**caractérisé en ce que**
à chaque agencement de capteurs (23a..b) sont associés une pluralité de capteurs à induction (25), préférentiellement 5 capteurs à induction (25), et chaque capteur à induction (25) génère un signal de tension (49a..e), préférentiellement chacun des signaux de tension générés (49a..e) étant analysé séparément, et plus préférentiellement plusieurs ou tous les signaux de tension (49a..e) d'un couteau de hachage détecté (8) étant réunis avant une analyse en un ou plusieurs signaux de tension (49a..e).

9. Agencement de détection pour la détection d'un état d'usure d'un agencement de couteaux de hachage selon une des revendications précédentes,
**caractérisé en ce que**
dans l'unité d'analyse (36) et/ou dans un autre équipement de traitement de données est enregistrée une valeur de consigne « couteau tranchant » (66), et **en ce que**, en cas de soupassement de cette valeur de consigne (66), un signal d'affûtage est généré, plus préférentiellement **en ce que** la valeur de consigne (66) forme une amplitude (44) du signal de tension généré (49a..e).

10. Agencement de détection pour la détection d'un état d'usure d'un agencement de couteaux de hachage selon la revendication 9,
**caractérisé en ce que**
la génération d'un signal d'affûtage (67) inclut préférentiellement la génération d'un signal d'avertissement, préférentiellement la visualisation des couteaux de hachage (8) qui soupassent la valeur de consigne (66).

11. Agencement de détection pour la détection d'un état d'usure d'un agencement de couteaux de hachage selon la revendication 9,
**caractérisé en ce que**
la génération d'un signal d'affûtage (67) inclut plus préférablement un déclenchement d'une opération d'affûtage (70).

12. Agencement de détection pour la détection d'un état d'usure d'un agencement de couteaux de hachage selon une des revendications précédentes,
**caractérisé en ce que**
l'appréciation du tranchant (65) et/ou de l'état d'usure (39) s'effectue au moyen de critères d'évaluation (72), les critères d'évaluation (72) étant un ou plusieurs des critères d'évaluation « longueur de surface d'affûtage du couteau de hachage respectif » (72a), « rotondité de la pointe de couteau de hachage » (72b), « usure générale de couteau » (72c) et/ou « bombement du couteau de hachage » (72d) respectivement « distance relative de la contre-lame au couteau de hachage » (72e).

13. Agencement de détection pour la détection d'un état d'usure d'un agencement de couteaux de hachage selon la revendication 12,
**caractérisé en ce que**
une valeur de consigne (73) est enregistrée pour chaque critère d'évaluation (72a..e) dans l'unité d'analyse (36) et/ou dans un autre équipement de traitement de données et **en ce qu'**en cas de soupassement de cette valeur de consigne (73) est généré un signal d'affûtage (67) et/ou un signal de changement de couteau, plus préférentiellement **en ce que** la valeur de consigne (73) forme une amplitude (44) du signal de tension généré (49a..e).

14. Agencement de détection pour la détection d'un état d'usure d'un agencement de couteaux de hachage selon la revendication 13,
**caractérisé en ce que**
la génération d'un signal d'affûtage (67) inclut préférentiellement la génération d'un signal d'avertissement, préférentiellement la visualisation des couteaux de hachage (8) qui soupassent la valeur de consigne (73).

15. Agencement de détection pour la détection d'un état d'usure d'un agencement de couteaux de hachage selon la revendication 14,
**caractérisé en ce que**
la génération d'un signal d'affûtage (67) inclut préférentiellement un déclenchement d'une opération d'affûtage (70) et/ou l'avertissement relatif à un remplacement d'un couteau de hachage (8) .

16. Agencement de détection pour la détection d'un état d'usure d'un agencement de couteaux de hachage selon la revendication 12,
**caractérisé en ce que**,
en cas de sélection du critère d'évaluation « rotondité de la pointe de couteau de hachage » (72b), la valeur de consigne (73) est une amplitude (44) du signal de tension généré (49a..e).

17. Agencement de détection pour la détection d'un état d'usure d'un agencement de couteaux de hachage selon la revendication 12,
**caractérisé en ce que**,
en cas de sélection du critère d'évaluation « longueur de surface d'affûtage du couteau de hachage respectif » (72a), la valeur de consigne (73) est une durée de vibration (43) de la tension induite (44).

18. Agencement de détection pour la détection d'un état d'usure d'un agencement de couteaux de hachage selon la revendication 12,
**caractérisé en ce que**
en cas de sélection du critère d'évaluation « usure générale de couteau » (72c), la valeur de consigne (73) inclut une amplitude (44) et une durée de vibration (43) du signal de tension généré (49a..e) .

19. Agencement de détection pour la détection d'un état d'usure d'un agencement de couteaux de hachage selon la revendication 12,
**caractérisé en ce que**
en cas de sélection du critère d'évaluation « bombement du couteau de hachage » (72d) respectivement « distance relative de la contre-lame au couteau de hachage » (72e), la valeur de consigne (73) est une amplitude (44) du signal de tension généré (49a..e).
